Europäisches Patentamt

European Patent Office

Office européen des brevets

(11) Veröffentlichungsnummer: **0 096 152**
**B1**

# (12) EUROPÄISCHE PATENTSCHRIFT

(45) Veröffentlichungstag der Patentschrift:
18.10.89

(51) Int. Cl.⁴: **G 01 D 5/34**

(21) Anmeldenummer: 83101266.1

(22) Anmeldetag: 10.02.83

(54) Stellungsgeber für Antriebsanlagen, insbesondere von Fahrzeugen.

(30) Priorität: 08.06.82 DE 3221621

(43) Veröffentlichungstag der Anmeldung:
21.12.83 Patentblatt 83/51

(45) Bekanntmachung des Hinweises auf die Patenterteilung:
18.10.89 Patentblatt 89/42

(84) Benannte Vertragsstaaten:
DE FR GB IT

(56) Entgegenhaltungen:
DE-A- 2 431 630
DE-A- 3 019 878
DE-B- 1 900 660
DE-C- 439 717
GB-A- 2 021 760
US-A- 3 708 681
US-A- 4 320 293

(73) Patentinhaber: RENK AKTIENGESELLSCHAFT,
Gögginger Strasse 71 - 83, D-8900 Augsburg (DE)

(72) Erfinder: Kirstein, Gerhard, Dipl. Ing., Auf dem Kreuz 27,
D-8900 Augsburg (DE)

## Beschreibung

Die Erfindung betrifft einen fotoelektrischen Stellungsgeber für Antriebsanlagen von Fahrzeugen gemäß dem Oberbegriff des Patentanspruches.

Ein solcher Stellungsgeber ist aus der US-A-3 708 681 bekannt. Er enthält ein optisch verschiebbares Glied, das zwei Lichtübertragungsbereiche aufweist, von denen der eine eine Reihe von abwechselnd lichtdurchlässigen und lichtundurchlässigen Segmenten besitzt und der zweite Bereich eine kontinuierlich sich ändernde Lichtdurchlässigkeit aufweist. Dieser zweite Lichtübertragungsbereich ist zur Bestimmung der Fahrzeuggeschwindigkeit vorgesehen, wobei jedoch die Geschwindigkeitsbestimmung so durchgeführt wird, daß der zurückgelegte Weg gemessen und daraus rechnerisch die Geschwindigkeit ermittelt wird. Ferner zeigt die DE-A-1 900 660 eine Vorrichtung zum Regeln der Drehzahl eines Motors, indem ein Steuerglied der Kraftstoffzufuhr von einem elektromagnetischen Stellglied, normalerweise das Gaspedal, betätigt wird. Die DE-A-2 431 630 zeigt einen fotoelektrischen Stellungsgeber zur berührungslosen Stellungsanzeige eines im Saugrohr einer Brennkraftmaschine angeordneten Luftmeßorgans. Dieser bekannte Stellungsgeber enthält ein optisches Glied in Form eines Graukeils in einem von einer Lichtquelle zu zwei fotoelektrischen Wandlern verlaufenden Lichtbündel. Die GB-A-2 021 760 zeigt einen optischen Stellungsgeber mit zwei Lichtübertragungsbereichen, die jeweils eine sich kontinuierlich ändernde Lichtleitfähigkeit aufweisen. Die DE-A-3 019 878 zeigt eine Vorrichtung mit einem Mikroprozessor zur Steuerung des Radschlupfes von Flugzeugrädern. Ferner ist es bekannt, Mikroschalter, Potentiometer und Hallgeneratoren als Stellungsgeber zu verwenden.

Durch die Erfindung soll die Aufgabe gelöst werden, die Funktionssicherheit und Lebensdauer des Stellungsgebers zu verbessern.

Diese Aufgabe wird gemäß der Erfindung durch die Merkmale im kennzeichnenden Teil des Patentanspruches gelöst.

Die Erfindung hat folgende Vorteile: Keine Berührung zwischen den ortsfesten Teilen und bewegten Teilen des Stellungsgebers, so daß keine Meßfehler durch Reibung und kein Materialverschleiß auftreten. Das Lichtleitelement ist ein preislich billig herzustellendes Teil und die anderen Teile des Stellungsgebers sind handelsübliche Teile, so daß sich insgesamt ein niedriger Herstellungspreis ergibt. Der Stellungsgeber mißt Positionsänderungen des von ihm überwachten Teiles der Antriebsanlage kontinuierlich über dessen gesamten Bewegungsweg. Die in Abhängigkeit von der jeweiligen Stellung des Teils der Antriebsanlage erzeugten elektrischen Signale des Stellungsgebers können für eine Vielzahl von Funktionen verwendet werden, beispielsweise zur Positionsanzeige, jedoch auch zur Einstellung von Teilen der Antriebsanlage, beispielsweise zur Einstellung der Brennstoffzufuhr, zur Auslösung von Kupplungsvorgängen, Schaltvorgängen und Bremsvorgängen der Antriebsanlage.

Das Lichtleitelement des Stellungsgebers kann räumlich zwischen der Lichtquelle und dem Lichtempfänger angeordnet sein. In Abwandlung hiervon ist es auch möglich, die Lichtquelle und den Lichtempfänger auf der gleichen Seite des Lichtleitelements anzuordnen. Die sich längs des Positionsgeberbereiches ändernde Lichtleitfähigkeit des Lichtleitelementes ist in einem Falle dadurch gegeben, daß das Lichtleitelement im Positionsgeberbereich eine sich kontinuierlich ändernde Lichtdurchlässigkeit hat. Im anderen Fall kann die unterschiedliche Lichtleitfähigkeit dadurch gegeben sein, daß das Lichtleitelement im Positionsgeberbereich eine sich ändernde Lichtreflektionseigenschaft mit einer kleinsten Reflektion am einen Ende und einer größten Reflektion am anderen Ende des Positionsgeberbereiches aufweist.

Das Lichtleitelement kann aus einem lichtdurchlässigen Trägerkörper bestehen, vorzugsweise aus Kunststoffglas, wie z.B. Plexiglas. Die unterschiedliche Lichtleitfähigkeit im Positionsgeberbereich kann durch eine Einfärbung des Trägerkörpers, durch aufgebrachte Elemente, oder durch Aufrauhen oder sonstige Oberflächenbehandlung einer Oberfläche des Trägerkörpers gegeben sein. Die Lichtleitfähigkeit ändert sich im Positionsgeberbereich vorzugsweise nicht sprunghaft, sondern kontinuierlich. Dabei ist eine lineare Änderung der Lichtleitfähigkeit zweckmäßig.

Das Lichtleitelement kann längs seines Bewegungsweges außerhalb seines Positionsgeberbereiches einen zusätzlichen Informationsbereich mit lesbaren Zeichen aufweisen. Dadurch ist beispielsweise ein Meßvergleich der Signale möglich, die im Positionsgeberbereich und im zusätzlichen Informationsbereich gemessen werden.

Mehrere Ausführungsformen der Erfindung werden im folgenden mit Bezug auf die Zeichnungen beschrieben. Darin zeigen

Fig. 1 ein Blockschaltbild einer Antriebsanlage mit einem Stellungsgeber gemäß der Erfindung,

Fig. 2 eine Draufsicht auf ein Lichtleitelement des Stellungsgebers von Fig. 1,

Fig. 3 eine Seitenansicht einer anderen Ausführungsform eines Lichtleitelements des Stellungsgebers nach der Erfindung, und

Fig. 4 eine schematische Darstellung einer anderen Ausführungsform eines Stellungsgebers nach der Erfindung.

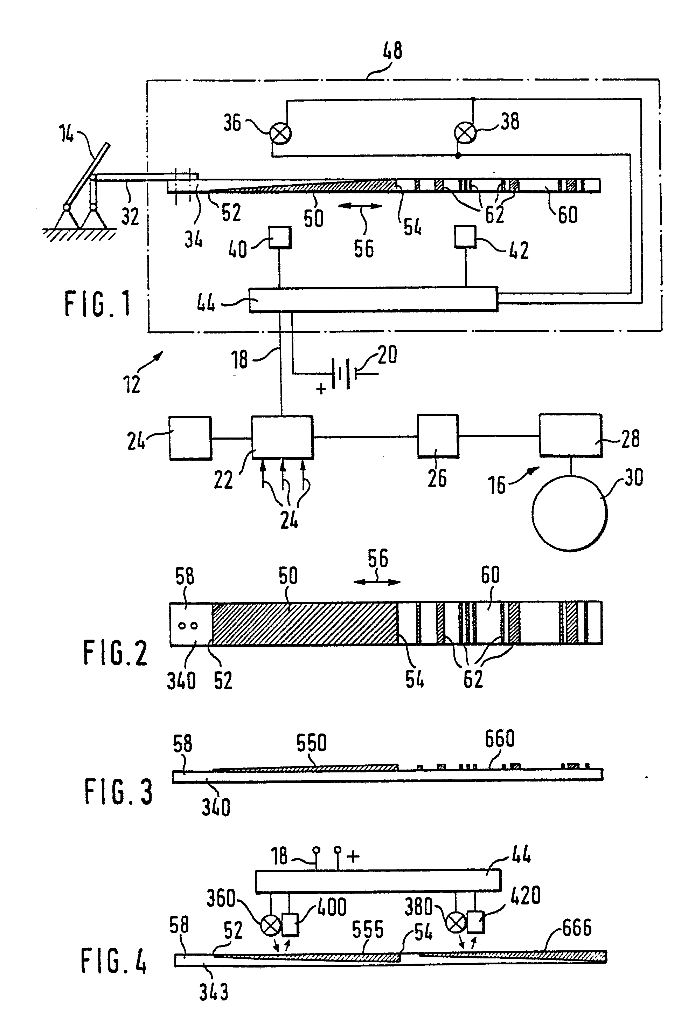

Der in Fig. 1 gezeigte Stellungsgeber 12 nach der Erfindung mißt kontinuierlich Stellungsänderungen eines Gaspedals 14 einer Antriebsanlage 16 und erzeugt auf einer Ausgangsleistung 18 ein von der Stellung des Gaspedals 14 abhängiges Signal. Zur Stromversorgung dient eine Spannungsquelle 20. Die jeweilige Stellung des Gaspedals 14 wird über einen Mikroprozessor 22 von einem Meßgerät 24 angezeigt. Der Mikroprozessor 22 erhält über Leitungen 24 weitere Informationen der Antriebsanlage 16 und steuert in Abhängigkeit von diesen Informationen und in Abhängigkeit von dem Signal der Ausgangsleitung 18 über ein Stellglied 26 eine Einspritzpumpe 28 eines Motors 30 der Antriebsanlage 16.

Das Gaspedal 14 betätigt über ein Gestänge 32 ein Lichtleitelement 34, welches im optischen Strahlenweg zwischen zwei Lichtquellen 36 und 38 auf seiner einen Seite und zwei Lichtempfängern 40 und 42 auf seiner anderen Seite angeordnet ist. Die Lichtquellen und die Lichtempfänger sind an eine elektronische Schaltung 44 angeschlossen, welche die Signale der Lichtempfänger 40 und 42 miteinander vergleicht und in Abhängigkeit vom Vergleichsergebnis über die Ausgangsleitung 18 ein entsprechendes Signal an den Mikroprozessor 22 abgibt.

Die Lichtquellen 36 und 38 geben Licht mit einer konstanten Lichtstärke ab und bestehen vorzugsweise aus sogenannten Leuchtdioden. Als Lichtempfänger zur Erzeugung eines von der empfangenen Lichtstärke abhängigen Signals eignen sich an sich bekannte Fotozellen, Fotodioden, Fototransistoren, Solarzellen, Selenzellen, Infrarotempfängerzellen usw. Das Lichtleitelement 34, die Lichtquellen 36 und 38, die Lichtempfänger 40 und 42 und die elektronische Schaltung 44 sind in einem Gehäuse 48 lichtdicht und staubdicht untergebracht.

Das Lichtleitelement 34 weist einen Positionsgeberbereich 50 auf, welcher sich zwischen zwei in Bewegungsrichtung mit Abstand hintereinander liegenden Stellen 52 und 54 erstreckt. Der Positionsgeberbereich kann auch als «Graukeil» bezeichnet werden und hat eine größte Lichtdurchlässigkeit an der Stelle 52 am einen Bereichsende und eine kleinste Lichtdurchlässigkeit an der am anderen Bereichsende gelegenen Stelle 54. Zwischen den beiden Stellen 52 und 54 nimmt die Lichtdurchlässigkeit längs des Bewegungsweges kontinuierlich linear ab. Das Lichtleitelement 34 besteht aus einem lichtdurchlässigen Trägerkörper 58, vorzugsweise aus Kunststoffglas wie beispielsweise Plexiglas. Die sich kontinuierlich ändernde Lichtleitfähigkeit im Positionsgeberbereich 50 längs des Bewegungsweges 56 kann durch verschiedene Maßnahmen gebildet werden. Eine dieser Maßnahmen kann darin bestehen, daß in den Trägerkörper 58 im Positionsbereich 50 Farbe mit sich ändernder Farbkonzentration eingegossen ist. Eine andere Möglichkeit besteht darin, auf den Trägerkörper 58 Farbe mit einer sich längs des Bewegungsweges 56 ändernder Konzentration aufzubringen. Eine solche Maßnahme ist in Fig. 3 durch einen Positionsgeberbereich 550 angedeutet. Ferner ist es möglich, eine unterschiedliche Lichtdurchlässigkeit dadurch zu erzielen, daß die Oberfläche des Trägerkörpers 58 aufgerauht oder mit Einbrennungen verschiedener Brennstärke versehen wird, wie dies in Fig. 4 durch den Positionsgeberbereich 555 angedeutet ist. Das Lichtleitelement 34 ist außerdem längs seines Bewegungswegs 56 außerhalb des Positionsgeberbereiches 50 bzw. 550 bzw. 555 mit einem zusätzlichen Informationsbereich 60 bzw. 660 bzw. 666 versehen, der technisch, vorzugsweise optisch, lesbare Zeichen 62 enthält, die an dem Trägerkörper 58 des Lichtleitelements 34 in gleicher Weise gebildet sind wie der Positionsgeberbereich 50 bzw. 550 bzw. 555. Der zusätzliche Informationsbereich gibt ebenfalls Auskunft über die jeweilige Stellung des Lichtleitelements 34. Die Lichtquelle 36 und der Lichtempfänger 40 befinden sich auf beiden Seiten des Positionsgeberbereiches 50, und die Lichtquelle 38 und der Lichtempfänger 42 befinden sich zu beiden Seiten des zusätzlichen Informationsbereiches 60. Damit können die Informationen der beiden Bereiche 50 und 60 in der Elektronikschaltung 44 miteinander verglichen und daraus ein genaues Meßwertsignal der gemessenen Position auf der Ausgangsleitung 18 erzeugt werden. Die Verwendung von zwei Bereichen 50 und 60 und zugehöriger optoelektronischer Schaltung dient auch zur Sicherheit dafür, daß bei Ausfall der Schaltung des einen Bereiches die betreffende Schaltung des anderen Bereiches ein Positions-Meßwertsignal auf der Ausgangsleitung 18 erzeugt.

Das Lichtleitelement in Fig. 3 mit den Bereichen 550 und 660 hat die Bezugszahl 340.

Fig. 4 zeigt eine Ausführungsform, bei der eine dem Positionsgeberbereich zugeordnete Lichtquelle 360 und ein mit ihr zusammenwirkender Lichtempfänger 400, ebenso wie eine Lichtquelle 380 und ein mit ihr zusammenwirkender Lichtempfänger 420 auf der gleichen Seite eines Lichtleitelements 343 angeordnet sind. Die sich ändernde Lichtleitfähigkeit im Positionsgeberbereich 555 und die unterschiedliche Lichtleitfähigkeit im zusätzlichen Informationsbereich 666 ist durch entsprechend unterschiedliche Lichtreflektionseigenschaften in diesen Bereichen gegeben. Die Lichtreflektionsfähigkeit des Positionsgeberbereiches 555 ist an der Stelle 52 am einen Ende am kleinsten und an der Stelle 54 am anderen Ende am größten. Dazwischen steigt die Lichtreflektionsstärke kontinuierlich, vorzugsweise linear, an. Der zusätzliche Informationsbereich 666 ist in gleicher Weise wie der Positionsgeberbereich 555 mit einer sich kontinuierlich ändernden Lichtleitfähigkeit versehen.

## Patentanspruch

Fotoelektrischer Stellungsgeber für Antriebsanlagen von Fahrzeugen, bei dem ein ein ortsabhängiges Lichtübertragungsverhalten aufweisendes optisches Glied (34; 340; 343), insbesondere ein Graukeil, welches mindestens zwei Lichtübertragungsbereiche (50, 60; 550, 660; 555, 666) aufweist und in einem von einer Lichtquelle (36, 38; 360, 380) zu einem fotoelektrischen Wandler (40, 42; 400, 420) verlaufenden Lichtbündel angeordnet und gegenüber diesem Lichtbündel durch eine Einstellvorrichtung der Antriebsanlage verschiebbar ist, dadurch gekennzeichnet, daß die Einstellvorrichtung ein Gaspedal (14) der Antriebsanlage ist, daß den Lichtübertragungsbereichen (50, 60; 550, 660; 555, 666) des optischen Gliedes (34; 340; 343) jeweils ein fotoelektrischer Wandler (40, 42; 400, 420) zugeordnet ist, und daß ein Mikroprozessor (22) vorgesehen ist, der in Abhängigkeit von den Signalen der beiden Wandler (40, 42; 400, 420) Teile (28) der Antriebsanlage steuert.

## Claim

Photoelectric position indicator for drive systems of vehicles, comprising an optical member (34; 340; 343) having positionally-dependent light-transmitting properties, especially a gray wedge, which has at least two light-transmitting zones (50, 60; 550, 660; 555, 666) and is arranged in a light beam extending from a light source (36, 38; 360, 380) to a photoelectric transducer (40, 42; 400, 420) and is displaceable relative to this light beam by means of a setting device of the drive system, characterised in that the setting device is a throttle pedal (14) of the drive system, that a photoelectric transducer (40, 42; 400, 420) is associated with each of the light-transmitting zones (50, 60; 550, 660; 555, 666) of the optical member (34; 340; 343), and that a microprocessor (22) is provided which controls components (28) of the drive system in dependence on the signals of the two transducers (40, 42; 400, 420).

## Revendication

Capteur de positions photo-électrique pour mécanismes d'entraînement de véhicules, dans lequel un élément optique (34; 340; 343) présentant un comportement de transmission de lumière dépendant de la localisation, en particulier un coin neutre, comporte au moins deux zones (50, 60; 550, 660; 555, 666) de transmission de lumière, est disposé dans un faisceau lumineux s'étendant d'une source de lumière (36, 38; 360, 380) à un convertisseur photo-électrique (40, 42; 400, 420), et peut être décalé par rapport à ce faisceau lumineux par l'intermédiaire d'un dispositif de réglage du mécanisme d'entraînement, caractérisé par le fait que le dispositif de réglage est une pédale d'accélérateur (14) du mécanisme d'entraînement; par le fait qu'un convertisseur photo-électrique (40, 42; 400, 420) est respectivement associé aux zones (50, 60; 550, 660; 555, 666) de transmission de lumière de l'élément optique (34; 340; 343); et par le fait qu'il est prévu un microprocesseur (22) qui, en fonction des signaux des deux convertisseurs (40, 42; 400, 420), commande des parties (28) du mécanisme d'entraînement.

FIG.1

FIG.2

FIG.3

FIG.4